(19) Europäisches Patentamt
European Patent Office
Office européen des brevets

(11) Publication number : **0 471 594 A2**

# (12) EUROPEAN PATENT APPLICATION

(21) Application number : **91307609.7**

(51) Int. Cl.[5] : **C08G 73/02,** D21H 17/00

(22) Date of filing : **16.08.91**

(30) Priority : **17.08.90 US 568917**

(43) Date of publication of application :
**19.02.92 Bulletin 92/08**

(84) Designated Contracting States :
**BE DE FR GB IT NL SE**

(71) Applicant : **THE DOW CHEMICAL COMPANY**
**2030 Dow Center Abbott Road**
**Midland, MI 48640 (US)**

(72) Inventor : **Glass, Terry W.**
**409, Oyster Creek Court**
**Richwood, Texas 77531 (US)**
Inventor : **Weaver, Otha G., Jr.**
**55, South Trillum Court**
**Lake Jackson, Texas 77566 (US)**
Inventor : **Buckner, Wanda G.**
**106 Tamarisk Trail**
**Lake Jackson, Texas 77566 (US)**

(74) Representative : **Burford, Anthony Frederick et al**
**W.H. Beck, Greener & Co. 7 Stone Buildings**
**Lincoln's Inn**
**London WC2A 3SZ (GB)**

## (54) Unsaturated polyaminopolymers, derivatives thereof, paper containing the polyaminopolymers processes for making all three.

(57) Polyaminopolymers containing functionality are prepared by (a) contacting a polyfunctional amine with an unsaturated alkylating agent to form an amine/unsaturated alkylating agent adduct ; (b) contacting the adduct with a polyfunctional compound to form a polyaminopolymer ; (c) contacting the polyaminopolymer with a halogen, hypohalous acid or precursor thereof to form a polyaminopolymer having halohydrin or dihalo functionality ; and (d) raising the pH of the polyaminopolymer having halohydrin or vicinal dihalo functionality to cause an increase in molecular weight. Optionally, the polyaminopolymer of step (b) or (c) is contacted with a crosslinking agent therefor having at least two functional groups reactive with amine groups to form a crosslinked polyaminopolymer. When such a crosslinked polyaminopolymer is formed, step (d) can be omitted. The polyaminopolymer of the invention are useful for preparing paper having improved wet strength.

EP 0 471 594 A2

This invention relates to polyamine reactions and their use in preparing polyaminopolymers, particularly to preparation of certain polyaminopolymers having halohydrin or vicinal dihalo (at least one halogen on each of two adjacent carbon atoms) functionality.

Certain resins are used to improve wet strength of paper. Such resins include reaction products of certain polyamides with a halohydrin, or a precursor thereof, for example an epihalohydrin such as is disclosed in U. S. Patents 2,926,116; 2,926,154; and 3,332,901. Certain of these resins are sold by Hercules Incorporated under the tradename Kymene™.

When epihalohydrins are used in preparing the resins, there is sometimes residual epihalohydrin, which may cause inconvenient handling procedures to avoid human contact. Use of epihalohydrin is avoided in such processes as those disclosed in U.S. Patents 4,354,006; 4,419,498 and 4,419,500. These processes involve reacting a polyamine containing at least one tertiary amine group with an allyl halide to quaternize the amine and then reacting the quaternized product with a hypohalous acid to convert allyl substituents to halohydrin moieties. A process disclosed in U. S. Patent 4,520,159 involves reacting a polyaminopolyamide with an allyl halide in aqueous medium to form allyl substituents on tertiary nitrogen atoms, then converting the allyl substituents to halohydrin moieties by reacting them with hypohalous acid and maintaining a pH of at least 7.0. Resulting polyaminopolyamide resins, however, are found to be inferior in wet strength performance to those manufactured using epihalohydrin. Additionally, such resins contain residual unreacted epihalohydrin, various dihalopropanols, allyl halides and other by-products which entail further processing for removal. The resins are often dark in color and may require additional crosslinking agents to improve wet strength performance.

It would be desirable to produce a polyaminopolyamide wet strength resin which contains no measurable epihalohydrin, dihalopropanols, or allyl halide. Advantageously, the resin would be low in color and have wet strength properties at least equivalent to the resins made using epihalohydrins.

In one aspect, the present invention is a process for making a polyaminopolymer which contains functionality comprising the steps of (a) contacting a polyfunctional amine with an unsaturated alkylating agent under reaction conditions to form an amine/unsaturated alkylating agent adduct; (b) contacting the adduct with a polyfunctional compound such that a polyaminopolymer is formed; (c) contacting the polyaminopolymer with a halogen, hypohalous acid or precursor thereof such that a polyaminopolymer having halohydrin or vicinal dihalo functionality is formed, and (d) raising the pH of the polyaminopolymer having halohydrin or dihalo functionality sufficiently to cause an increase in molecular weight. The invention includes polymers prepared by such a process.

Alternatively, the invention is a process for preparing a polyaminopolymer which contains functionality comprising the steps of (a) contacting a polyfunctional amine with an unsaturated alkylating agent under reaction conditions to form an amine/unsaturated alkylating agent adduct; (b) contacting the adduct with a polyfunctional compound such that a polyaminopolymer is formed; (h) contacting the polyaminopolymer with a crosslinking agent therefor having at least two functional groups reactive with amine groups such that a crosslinked polyaminopolymer is formed; and (c) contacting the crosslinked polyaminopolymer with a halogen, hypohalous acid or precursor thereof such that a polyaminopolymer having halohydrin or dihalo functionality is formed.

In the present invention, the halohydrin functionality is suitably converted to other functionality such as an epoxide. Alternatively, during the molecular weight increase, the pH adjustment may convert the halohydrin or dihalo functionality to other functionalities such as epoxide functionalities which are believed to be active sites for inducing wet strength in paper.

There are optionally additional steps in the process of the present invention. In a step referred to as (e), between steps (b) and (c), the pH of the polyaminopolymer is optionally lowered. Also, or alternatively, the polyaminopolymer is optionally contacted with an alkylating agent or quaternary amine containing compound after step (b) such that a water soluble quaternized polyaminopolymer is formed, in steps designated as steps (f) and (g), respectively.

The functionalized polyaminopolymer of the present invention is preferably suitable for use as a wet strength resin in papermaking. The use of such wet strength resins in papermaking and paper made using the resins are also aspects of the invention.

In the step of contacting a polyfunctional amine with an unsaturated alkylating agent to form an amine/unsaturated alkylating agent adduct, any polyfunctional amine reactive with an unsaturated alkylating agent is used. Preferably, the adduct formed is one capable of reacting with a difunctional monomer to form a polymeric material. Suitable polyfunctional amines include amines having at least one amine nitrogen atom, preferably at least one amine nitrogen atom having at least one hydrogen atom thereon (primary or secondary amine, hereinafter N-H group which refers to the N-H atom combination in an $NH_x$ group, where x is 1 or 2) and at least one other functional group which is reactive with a polyfunctionial compound for step (b) of the invention. Such functional groups include N-H, OH, and carboxylic ester groups and are preferably N-H or OH, more preferably N-H. Most preferably the polyfunctional amine has from 1 to 10, more preferably from 2 to 5,

most preferably from 3 to 4 N-H groups per polyamine molecule. Primary amines are preferred when faster reaction rates are desirable. Amine groups are preferred because they react faster than hydroxyl groups.

The polyfunctional amine is suitably unsubstituted or inertly substituted, that is substituted with groups which do not interfere undesirably with reactions used in forming the polyaminopolymer having functionality, such substituents include quaternary amine, amide, alkyl, cycloalkyl, aralkyl, and ether groups. The polyfunctional amine preferably has a total of from 1 to 20, more preferably from 2 to 10, most preferably from 4 to 6 carbon atoms. These are preferred because of ready commercial availability as well as improved solubility and preferred density of reactive sites in resulting polymers.

Suitable polyfunctional monoamines include alkanol amines such as ethanolamine, diethanolamine, propanolamine, dipropanolamine, butanolamine, dibutanolamine, monoisoproanolamine, and diisoproanolamine. Other exemplary monoamines include diallylamine, and allylamine.

Suitable polyfunctional polyamines preferably contain at least two active terminal amine nitrogens in which the nitrogen atoms are linked together by $C_nH_{2n}$ groups where n ranges from 2 to 10, more preferably from 2 to 4, and most preferably from 2 to 3. Such polyamines include polyethylene polyamines, polypropylene polyamines, polybutylene polyamines, and hexamethylenediamine with polyethylene polyamines representing an economically preferred class of amines. Such amine mixtures include linear as well as cyclic and branched isomers and congeners (members of the same family of isomers) of the various amine types.

Suitable polyethylene polyamines include diethylenetriamine, bis-2-hydroxyethyl ethylenediamine, triethylenetetraamine, tetraethylenepentamine, pentaethylenehexamine, hexaethyleneheptamine and higher molecular weights ethyleneamines preferably having average molecular weights of from 200 to 500 such as those present in products like E-100 commercially available from The Dow Chemical Company, aminoethylpiperazine, hydroxyethylpiperazine, aminoethylethanolamine, bis(3-aminopropyl)ethylenediamine, bis(2-aminoethyl)-1,3-diaminopropane, N,N-dimethyl-diethylenetriamine, tris-(2-aminoethyl)amine, polyethyleneimine, branched and cyclic isomers or congeners of these amines as manufactured by commercial processes, or mixtures thereof.

Suitable polypropylene polyamines include propylenediamine, bis(3-aminopropyl)amine, bis(3-aminopropyl)-1,3-diaminopropane, or mixtures thereof.

Diethylenetriamine is most preferred because it has a maximum number of functional groups with few carbon atoms and is water soluble; it contains two primary and one secondary amine nitrogens.

The polyamines are suitably contacted with any unsaturated alkylating agent. An unsaturated alkylating agent is an organic compound having at least one double or triple, preferably double, bond, which compound alkylates an amine leaving the unsaturated portion of the alkylating agent on the amine nitrogen. Suitable alkylating agents include unsaturated glycidyl ethers, unsaturated sulfates and unsaturated halides for example chlorides, bromides, iodides or fluorides. The alkylating agent is preferably an organic halide which is preferably chloride, bromide or iodide, more preferably a chloride or bromide, most preferably a chloride. The alkylating agent preferably has from 3 to 6, more preferably from 3 to 5, most preferably from 3 to 4 carbon atoms. The unsaturated alkylating agent is suitably unsubstituted or inertly substituted, that is substituted with groups which do not interfere undesirably with reactions used in forming the polyaminopolymer containing functionality, such substituents include hydroxyl, ether, alkyl, aryl, and substituted aryl groups.

Suitable unsaturated organic halides include allyl chloride, allyl bromide, allyl iodide, 1-chloro-3-butene, 2-chloro-3-butene, 1-chloro-4-pentene, 2-chloro-4-pentene, 3-chloro-4-pentene, 1-chloro-2-butene, 1-chloro-2-pentene, 1-chloro-3-pentene, 3,3-dichloropropene, 3,3,3-trichloropropene, 1,3-dichloropropene, 1,1,3-trichloropropene, 1,2,3-trichloropropene and their bromo and iodide analogs. These compounds are suitably unsubstituted or inertly substituted, that is having substituents which are not undesirably reactive in the hypohalous acid reaction, such as ethers and alkyl groups or any other group which is unreactive to chlorine or hypohalous acid under reaction conditions. Preferred unsaturated organic halides include allyl chloride or allyl bromide with allyl chloride being most preferred.

A ratio of from 10:1 to 1:10 of the polyfunctional amine to the unsaturated alkylating agent is advantageously used depending on the conversion rates and selectivity desired. A 2 to 1 ratio of polyfunctional amine to suitable unsaturated alkylating agent is advantageous such that the excess amine neutralizes amine hydrohalides that are generated as the alkylating agent reacts with the amine. However, a large excess of allyl halide is advantageously used (3 or 4 to 1 mole ratio) to increase amine yields if reaction conditions are utilized to control the location of the allyl chloride addition, as is explained in U.S. Patent 3,565,941 (Dick et al.) which is incorporated herein by reference in its entirety. Dick et al. teach that amines containing primary and secondary amino nitrogens can be selectively alkylated on the secondary amino groups using acid blocking for the primary nitrogen by forming an amine salt.

In the synthesis of bis(2-aminoethyl)allyl amine, the pH of the diethylenetriamine solution is controlled to between 5 and 7 to provide maximum selectivity at a reasonable reaction rate. The ratio of diethylenetriamine

solution to hydrochloric acid to allyl chloride is 1:2:2. The reaction is preferably run in water. An excess of alkylating agent (allyl chloride) to amine (unlike in the teachings of U.S. patent 3,565,941) is used to maximize conversion of the amine. Reactor temperature is maintained between 40° and 50°C. A large excess of allyl chloride is suitably used in the reaction with polyfunctional monoamines, especially in the presence of an inorganic base such as sodium hydroxide.

The polyfunctional amine and the unsaturated alkylating agent are preferably selected such that the resulting adduct thereof has at least two reactive functional groups reactive with a polyfunctional compound (monomer). Preferably, the adduct has from 2 to 3 such reactive groups. Two such groups are sufficient to form a linear polymer. Three are sufficient to achieve desirable crosslinking and/or molecular weight. The reactive groups are preferably amine groups (suitably primary or secondary, preferably primary).

Reaction conditions suitable for contact of the polyfunctional amine with an unsaturated alkylating agent to form a amine/unsaturated alkylating agent adduct are used. Contact preferably takes place at a temperature sufficient for the reaction to take place and below the boiling point of the unsaturated alkylating agent.

The temperature of the reaction depends on the alkylating agent used. In the case of allyl chloride, a temperature of from 0°C to 80°C, more preferably from 25°C to 50°C is advantageously used at atmospheric pressure. In the use of alkylating agents having unsaturated groups different from allyl groups, the temperature is adjusted to achieve adduct formation but avoid decomposition. Such temperature adjustments are within the skill in the art. Use of iodides and bromides generally allows use of higher temperatures, but because of faster reactions than are observed for the corresponding chlorides, lower temperatures are often advantageous. Higher reactor pressures allow temperatures higher than the atmospheric boiling point of the alkylating agent to be used with corresponding increases in yield and reduced reactor times.

While use of a solvent is unnecessary, solvents are preferred to maintain salt solubility, and achieve moderate to low viscosities. Solvents are also helpful when the amine is blocked to control the reaction. Solvent systems in which the polyamine and alkylating agent are soluble or dispersible and from which the alkylating agent can be separated after the reaction is complete are also suitable. Such solvents include methanol, ethanol, isopropanol, toluene, and blends thereof with water.

Details of such reactions are disclosed, for instance, in U.S. Patents 3,051,751 (Levis, et al), 4,096,133 (Zweigle) and in J. Chem. Soc. (C), 1966 pp. 203-208 (Agnew and Parrish) which are incorporated herein in their entireties. In Levis, et al. a 2-p-dioxanone is used to block a primary amine group to form an N-substituted-β-hydroxyethoxy acetamide group by reaction under anhydrous conditions at temperatures of up to 60°C. In Zweigle, a quaternizing agent such as an alkyl compound is used to form a polyquaternary ammonium salt by reacting with certain polymers under certain acidic conditions in the presence of a lower alkanol such as methanol. Agnew and Parris teach formation of al yl derivatives of ethylenediamine and diethylenetriamine followed by separation using ion-exchange chromatography.

When polyfunctional monoamines such as diethanolamine are used, pH control during the addition of alkylating agent is not necessary.

When the polyamine has more than one type of amine group, for example primary and secondary amine groups or amine groups which differ in their pKb's by at least 2 units, it is useful to selectively block certain amine groups such that the unsaturated alkylating agent reacts selectively with a desired type of amine group. Suitable processes include those disclosed in U.S. Patents 3,051,751 (Levis et al.), 3,565,941 (Dick et al.) and J. Chem. Soc. (C), 1966 pp. 203-208 (Agnew and Parrish) which are incorporated herein in their entireties. Particularly, when it is desirable to form the adduct of an unsaturated alkylating agent and a secondary amine group in the presence of primary amine groups, such as in the case of diethylenetriamine, it is useful to adjust the pH of the polyamine from 4 to 9, preferably from 5 to 7 such as by addition of an acid, preferably an inorganic acid, such as hydrochloric acid, before contacting the polyamine with the unsaturated alkylating agent and to maintain the same pH range with a base, preferably an inorganic base, such as sodium hydroxide, during reaction of the polyamine with the alkylating agent. A high degree of selectivity is observed within these pH ranges, with increased selectivity in the preferred range.

Reaction times vary depending on pressure, temperature, and unsaturated alkylating agent used. With allyl chloride and diethylenetriamine at atmospheric pressures, the reaction takes 24 to 36 hours at a temperature of 45°C.

Similar blocking is also accomplished using certain ketones as taught in J. Chem. Soc. (C), 1966 pp. 203-208 (Agnew and Parrish) which is incorporated herein in its entirety. The advantage of using ketones instead of acids for blocking is that salt formation is minimized with ketone blocking. Also, the ketone is preferably regenerated and recycled during a hydrolysis step that regenerates the substituted amine (amine/unsaturated alkylating agent adduct). Acid blocking methods produce salt as a by product in amounts proportional to the amount of acid and alkylating agent used in the synthesis. The choice between inorganic acid and ketone to block the amines during the amine reaction with the unsaturated alkylating agent is based more on such process considerations than on chemical considerations.

When a relatively pure polyaminopolymer is desired, such as for use as a wet strength resin, it is preferable to purify the amine/unsaturated alkylating agent adduct to remove unreacted reactants and by-products such as unreacted alkylating agent, for example allyl chloride, 1-hydroxypropene, and to a lesser extent unreacted polyamine. Unpurified or "crude" polyamines are suitably used but are not usually preferred. Such purification is within the skill in the art. Conveniently, distillation is used as is exemplified in the examples of the invention. Mixtures or blends of the polyamine and polyamine/unsaturated alkylating agent adduct are, however, acceptable and preferred over pure unsaturated alkylating agent adduct to achieve crosslinking as evidenced by gelation and/or molecular weight increase.

In the step of contacting the adduct of the unsaturated alkylating agent and amine with a polyfunctional compound such that a polyaminopolymer is formed, any polyfunctional compound reactive with the adduct is suitably used. Polyaminopolymers include polyaminopolyamides, polyaminopolyesters, polyaminopolyethers, and polyaminopolyamines. Preferably, the polyfunctional compound is reactive with terminal functional groups of the adduct. The polyfunctional compound is suitably unsubstituted or inertly substituted, that is substituted with groups which do not interfere undesirably with reactions used in forming the polyaminopolymer containing functionality, suitable substituents include ether, alkyl, and aryl groups. The polyfunctional compound preferably has at least 2 reactive groups preferably from 2 to 4, more preferably from 2 to 3 preferably two functional groups per molecule. These numbers of functional groups are preferred to build linear polymers. The functional groups are suitably the same or different so long as at least two are reactive with the adduct; most preferably the functional groups in a compound are alike, for example all carboxylic acid groups.

The functional groups are suitably any group reactive with the adduct, preferably with amine groups thereof, and include carboxylic acid groups, carboxylic ester groups, aldehydes, ketones, halides (particularly acyl halides, especially acrylate halides), ureas, epoxides, diketones; $\alpha,\beta$- unsaturated acids, esters, (especially acrylates) or aldehydes; or chloroformate. The polyfunctional compound preferably has from 2 to 12, more preferably from 4 to 8, most preferably from 4 to 6 carbon atoms. These numbers of carbon atoms help maintain water solubility and a relatively high density of unsaturated groups per molecular weight unit. The polyfunctional compound preferably is linear with at least two terminal functional groups capable of reacting with the polyfunctional amine/unsaturated alkylating agent complex. Suitable polyfunctional compounds include acids such as adipic acid, succinic acid, oxalic acid, glutaric acid, pimelic acid, suberic acid, azelaic acid, sebacic acid, and their halides (acyl halides such as adipyl chloride, glutaryl chloride, succinyl chloride, pimelyl chloride), as well as their methyl and ethyl esters. Blends of the above compounds can also be used to vary the properties of the resulting polyaminopolymer. Anhydrides of the above compounds are also suitable. Unsaturated acids such as fumaric acid or maleic acid are suitably used. Alpha, beta unsaturated acids such as acrylic acid, crotonic acid, methacrylic acid, cinnamic acid, sorbic acid, isocrotonic acid, as well as their methyl and ethyl esters such as methyl acrylate are suitable polyfunctional compounds, particularly when the polyfunctional unsaturated organic amine complex contains terminal primary and/or secondary nitrogens. Suitable polyfunctional aldehydes include acrolein, crotonaldehyde, cinnamaldehyde, glutaraldehyde, and the dialdehydes of each of the above mentioned diacids. Suitable dihalides include ethylene dichloride, 1,3-propylene dichloride, 1,4-butylene dichloride, 1,5-dichloropentane, 1,6-dichlorohexane, and their bromides and iodides and fluorides as well as branched versions of the above such as 2,4 dichloropentane and 2,5-dichlorohexane. Formaldehyde, urea and acrylamide and other compounds capable of reacting with at least two, preferably amine, functional groups are also suitable as polyfunctional organic compounds and are capable of polymerization with polyfunctional amine complexes with an unsaturated alkylating agent. Polycarboxylic acids, particularly, dicarboxylic acids such as adipic acid are most preferred. More preferred polyfunctional compounds are diglycolic acids and saturated aliphatic dicarboxylic acids having from 3 to 8 carbon atoms.

The molar ratio of the polyfunctional amine/unsaturated alkylating agent adduct to the polyfunctional organic compound is preferably from 0.6 to 1.4, more preferably from 0.8 to 1.2, most preferably from 0.9 to 1.1. These ranges produce increasingly desirable high molecular weight polymers. Otherwise unpolymerized materials remain.

Conditions suitable for reaction of the adduct with the polyfunctional compound depend on the type of reaction and are within the skill in the art. For instance, in reactions such as those of amines with carboxylic acid functional groups wherein water or an alcohol is formed, temperatures are preferably sufficiently high to drive off water or alcohol formed during the reaction, preferably from 140°C to 250°C, more preferably from 160°C to 220°C, most preferably from 180°C to 210°C at atmospheric pressure, because these temperatures are sufficient to drive the reaction by removal of the water or alcohol. Lower temperatures are suitably used when pressures are below atmospheric or when for example nitrogen purging is used to aid in water removal. The temperature is preferably kept below the boiling point of all components of a reaction mixture until the product is formed. Then the temperature is suitably raised to increase the completeness of the reaction but kept below

the temperature at which the amine/alkylating agent adduct decomposes. When the reaction does not involve water production, e.g in reaction of the adduct with methyl acrylate, dimethylglutarate, acrolein, or ethylenedichloride reaction temperatures are preferably lower such as from 40°C to 120°C.

Reactions of polyfunctional compounds with amine/unsaturated alkylating agent adducts are conveniently run neat, with no solvent. If needed, a high boiling nonreactive solvent such as diethylene glycol dibutyl ether can be used. Other solvent systems are also suitably used, the choice of solvent or solvent system is dependent on the solubility of the individual reactants and resulting polymer chosen for the reaction and is within the skill in the art. A purge, for example with nitrogen, suitably removes undesired low molecular weight byproducts of the reaction such as water, methanol, ammonia, and ethanol.

The polyaminopolymer contains unsaturated organic functionality from the unsaturated alkylating agent and, if the reaction is run neat, is usually diluted with a suitable solvent (preferably water) before the reactor temperature is lowered to the point that the reactor contents have hardened or increased in viscosity to the point of being difficult to transfer. For instance, in the case of a allyl substituted diethylenetriamine reacted with adipic acid, the product is a solid at room temperature and highly viscous at 100°C in the neat form; therefore, water is advantageously added to the reactor and mixed with the reactor contents at 125°C to maintain the product as a flowable liquid. U.S. Patents 3,058,873 (Keim et al.); 3,197,427 (Schmatz); and 3,240,761 (Keim et al.) illustrate such reactions and are incorporated herein by reference.

To produce a wet strength resin having desirable performance properties such as wet and dry strength and processing/manufacturing properties such as controllable and timely viscosity buildup or crosslinking at room temperature, it is generally preferable to complete the reaction as determined by halide or residual acid number titrations (expressed in milliequivalents (meq.) of potassium hydroxide (KOH) per gram (g.) of sample). The reaction is considered complete when the halide or acid numbers remain constant at reaction temperatures for at least 1 hour or when the halide or acid number reaches some previously selected number. In the case of a polyaminopolymer formed from an amine like allyl substituted diethylenetriamine reacted with a polyfunctional compound such as adipic acid, the reaction is continued until the acid number reaches preferably from 1 to 50, more preferably from 5 to 15 meq. KOH/g. After the preselected acid number is reached, the reaction medium is preferably cooled and a reagent suitable for quenching the reaction is added, for example water in the case of adipic acid reacted with bis(2-aminoethyl)allyl amine, to an acid number of 10 (neat). In the case of a polyaminopolyamide product, or any other polymer having an inconveniently high viscosity, it is generally convenient to use sufficient water to dissolve the polymer to produce a finished polymer with moderate viscosity.

The amine/unsaturated alkylating agent adducts (hereinafter unsaturated adduct) are advantageously mixed with saturated polyamines having from 2 to 4 preferably from 2 to 3 amine groups before reacting with the polyfunctional compound. The weight ratio of unsaturated adduct to saturated polyamine is preferably at least 50 percent by weight unsaturated adduct to 50 percent saturated polyamine; more preferably from 70/30 to 100 percent unsaturated adduct; most preferably from 80/20 to 90/10; even more preferably from 85/15 to 90/10 (all ratios by weight). The presence of the saturated polyamine provides available amino hydrogens for crosslinking and accompanying molecular weight build in reactions subsequent to the hypohalous acid reaction. Such polymers containing from 10 to 20 percent by weight amines containing available primary or secondary nitrogens generally greatly decrease the reaction times for adequate molecular weight increase, and are, for that reason, preferred.

Optionally, any of the polyaminopolymers are reacted with alkylating agents such as dimethyl sulfate, methyl iodide, dimethyl carbonate, trimethyloxonium tetrafluoroborate, triethyloxonium tetrafluoroborate, methyltosylate, ethyl tosylate, diethyl sulfate, ethyl iodide, methyl bromide, ethyl bromide and mixtures thereof. These reagents are believed to generate a quaternary amine in the polymer backbone when they react with a tertiary amine.

Alternatively, the polyaminopolymer is reacted with compounds such as glycidyltrimethylammonium chloride, (2-bromoethyl)trimethylammonium chloride or bromide, (2-chloroethyl)trimethylammonium chloride or other compounds which have a quaternary amine group in the molecule and have groups reactive with the polyamino polymer such as epoxide or alkyl halide groups. These molecules result in cationic (quaternary) character in a branched portion (side chain) of the polyaminopolymer molecule rather than on the backbone thereof.

In either of these optional steps for forming quaternary amine containing polyaminopolymers (quaternization), a molar ratio of alkylating agent to the total theoretical secondary and tertiary amine groups in the polymer is suitably from 0.05:1 to 1:1 respectively, with the preferred range being from 0.1:1 to 0.5:1 and most preferred from 0.2:1 to 0.4:1. Reaction conditions for such alkylations are within the skill in the art. For instance, for alkylation by dimethyl sulfate in water at atmospheric pressure, 2 hours at 0°C followed by 30 minutes at 60°C (to decompose unreacted sulfate) is convenient. A glycidyl alkylating agent conveniently reacts at 25°C for several days; water is a convenient reaction medium. Either type of quaternization is suitably performed

after step (b) in the process of the invention, preferably after step (b) and before step (c). Since quaternizing increases solubility in water quaternizing early in the process facilitates later steps.

Either quaternary amine containing polyaminopolymers or polyaminopolymers without quaternary groups are suitably reacted with hypohalous acid or halogen. An advantage of using quaternary amine containing polyaminopolymers is that such resins are not as sensitive to pH changes as the polyaminopolymers without quaternary amine groups during synthesis, crosslinking, and use in papermaking.

In the step of contacting the polyaminopolymer with a halogen, hypohalous acid or precursor thereof such that a polyaminopolymer containing halohydrin or dihalo functionality is formed, any hypohalous acid is suitably used. Such acids can be readily generated by any of several methods discussed in United States Patents 3,578,400 (Wojtowicz et al.), 3,845,145 (Wojtowicz et al.), and 4,520,159 (Maslanku) which are incorporated herein in their entireties. For instance, a hypochlorite salt (such as sodium or calcium hypochlorite) is suitably reacted with carbon dioxide in a small amount of water and a large excess of solvent, preferably a ketone such as methyl ethyl ketone, such that the solvent extracts the hypohalous acid from the water as the acid is formed, leaving halide ions in the water (preferably using a weight percentage of water to solvent of from 1 percent to 10 percent). Preferably, the hypohalous acid is used as it is generated or is stored in the dark and at cool temperatures such as from -5°C to 0°C and, more preferably, is used within 48 hours. The hypohalous acid is suitably formed and used in any solvent therefor, more preferably in a solvent which is not soluble in water such as methyl ethyl ketone, acetonitrile, methylacetate, diethyl ketone, isobutyl ketone, or ethyl acetate. Such water miscible solvents as acetone are also suitable.

Alternatively, the hypohalous acid is suitably formed by contacting halogen gas, for example chlorine with water at a pH of 7 (for example by bubbling the halogen through the water). Alternatively, the hypochlorous acid is suitably formed by contacting halogen gas, for example chlorine, with water containing sodium hydroxide, until the pH drops to 7. The water suitably may have the polyaminopolymer in solution while the water is contacted with the halogen gas. Yet another method involves dissolving a halogen monoxide in water, which may optionally contain the polymer or be mixed with the polymer after an admixture of halogen monoxide and water are formed.

Hypohalous acid is believed to exist in equilibrium with the corresponding halogen, for example HOCl with $Cl_2$. The ratio of halogen to hypohalous acid depends on the pH the solution. For instance, at low pH (1 to 2) the chlorine/hypochlorous acid solution contains 50 mole percent chlorine relative to hypohalous acid, and at pH 7 it contains mostly hypohalous acid. Thus, if chlorine is bubbled into water at pH 7, the solution formed mainly contains HOCl. Either halogen or hypohalous acid is suitable for use in the practice of the invention, but chlorine is preferred because it is conveniently used in water and is believed to be the reactive species.

The polyaminopolymer is preferably reacted with hypohalous acid in aqueous medium, more preferably with the pH controlled to from 0 to 9, more preferably to less than 7 to avoid reaction of hypohalous acid with amine groups to form haloamines. When the polyaminopolymer is to be used in an application wherein a light color is preferred, the pH is, more preferably, kept below 3, most preferably from 2 to 3. Any acid including formic is suitably used for pH control, preferably it is an inorganic acid such as hydrochloric, nitric, perchloric or sulfuric acid, most preferably a hydrohalic acid; even more preferably, hydrochloric acid (HCl) is used to produce lowest color in a final polyaminopolymer. In a preferred procedure, the hypohalous acid is prepared in a solvent, and added to an aqueous solution of the polyaminopolymer, which solution is at a pH of from 2 to 3. Thus, the process of the invention is preferably described as having a step (e) between steps (b) and (c) of lowering the pH of the polyaminopolymer having halohydrin or dihalo functionality.

Although any inorganic acid can be used to control pH during the HOCl reaction, it has been found that the use of HCl greatly increases the rate of molecular weight increase of a resulting resin compared to that of resins formed with pH controlled by other acids such as sulfuric acid. Addition of from 0.01 to 10, preferably from 0.1 to 5, and most preferably from 1 to 3 weight percent salt, prior to a crosslinking procedure will also increase the rate of crosslinking of the resin over the rate observed when no salt is used. If salt is added prior to pH adjustment to 2, other inorganic acids such as sulfuric acid are suitably used. Any chloride salt is conveniently used for this purpose, but alkali metal chlorides are preferred and sodium chloride is more preferred because of availability and effectiveness.

A reaction mixture of unsaturated functionalized polyaminopolymer and hypohalous acid is preferably maintained at a temperature sufficiently low to prevent rapid decomposition of the hypohalous acid, preferably from -15 to 45°C, more preferably from 5 to 0°C. The temperature is maintained for a reaction time sufficient to allow the hypohalous acid to react to from 70 to 100 percent completion, preferably from 85 to 100 percent completion, most preferably from 90 to 100 percent completion. Running the reaction to relatively higher levels of completion functionalizes the polymer and minimizes residual hypohalous acid. Alternatively, remaining hypohalous acid is preferably removed by means within the skill in the art such as reaction with a bisulfite. Conveniently, such reaction times are for 2 to 4 hours. After an initial reaction time, the reaction mixture is raised

to room temperature and stirred for a period sufficient to allow the hypohalous acid concentration to reach less than 0.05 percent by iodometry, as described in the Standard Methods for the Examination of Water and Wastewater, 16th ed., American Public Health Association, Washington, DC. 1985, p. 298. If non-aqueous solvents insoluble in water are used in the reaction, the solvents are removed by means within the skill in the art such as flash distillation, vacuum stripping, nitrogen sparging, and/or physical separation; and the resulting halohydrin or dihalo functionalized polyaminopolymer is collected in the aqueous fluids.

To attain maximum reaction of the unsaturation, it is preferable that the molar amount of hypohalous acid used is in approximately equivalent molar proportions relative to the unsaturation in the polyaminopolymer. More preferably, the hypohalous acid is present in a molar amount of from 90 to 110 percent of the molar amount equivalent to the unsaturation. The amount hypohalous acid should be added to the polymer within a period of one hour, more preferably within less than 30 minutes, most preferably within 15 minutes.

The reaction of a polyaminopolymer with hypohalous acid, a halogen, or a precursor of either is illustrated by the reaction of hypochlorous acid with an allyl functionalized polyaminopolymer. The reaction mechanism of such reactions is not thoroughly understood. This invention is not limited by any proposed mechanism or theory. However, discussion of the reaction is offered to illustrate the reaction and is believed to represent the current known literature as well as analyses of the chemical reactions.

The reaction theoretically results in tertiary nitrogens having halohydrin functionalities as are illustrated by the following structures:

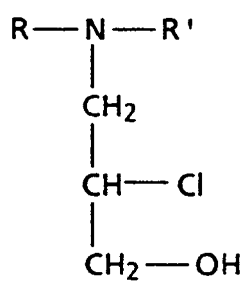

Formula I

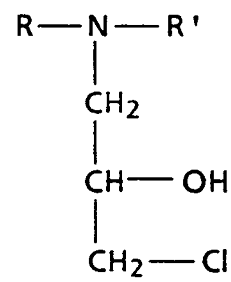

Formula II

wherein Cl is a chlorine and R and R′ comprise the polyaminopolymer. It is believed that the halohydrin formation is favored at pH ranges of 5-7. This reaction mechanism is discussed in detail in U.S. Patent 4,354,006, (Bankert) which is incorporated by reference herein in its entirety. According to the literature (for example Handbook of Chlorination, G. C. White, 2nd edition Van Nostrand, New York, 1986, page 361) at a pH of 2, the equilibrium between hypochlorous acid (HOCl) and chlorine is greater than 50 percent chlorine. At this pH approximately 50 percent of the HOCl added to the polyaminopolymer is converted to molecular chlorine which then reacts with the allyl functionality to form the chlorohydrins of Formulas I and II and dihalo functional group illustrated by the following formula:

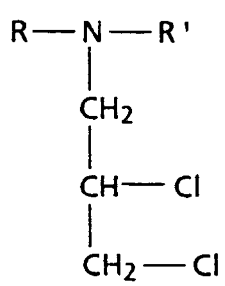

Formula III

where Cl is a chlorine atom and R and R′ comprise the polyaminopolymer. Halogen groups on adjacent carbon atoms as illustrated in Formula III are referred to herein as dihalo or vicinal dihalo functional groups.

Formation of the dichloro and/or chlorohydrin functionality when the reaction is conducted at a pH of 1.25 is indicated by the following nuclear magnetic resonance (NMR) data: A carbon 13 NMR of a reaction product

of the invention formed from an allyl functionalized polyaminopolyamide and HOCl reveals that a mixture of functional groups is produced in the polyaminopolyamide. The NMR spectrum is designed to indicate all carbons with an odd number of protons or hydrogen atoms as negative or down peaks. The chemical composition of the functionalized polyaminopolyamides described is such that only one carbon atom in the polymer contains an odd number of hydrogens. All chemical shifts are in parts per million (ppm) relative to an external tetramethyl silane (TMS) standard in water.

The peaks at 27.4183 and 37.9243 are characteristic of the difunctional carboxylic acid in the polyaminopolyamide backbone. The peaks at 49.1090 and 37.4421 are believed to represent carbons in the polyamino portion of the polymer backbone. The broad peak at 57.4932 represents the allylic carbon from the unsaturated alkylating agent which is converted by HOCl to halohydrin and/or dihalo functional groups.

The remaining peaks in the spectrum are from the two carbon atoms of the now functionalized olefinic group (allyl chloride in this example). These two carbon atoms are attached to hydroxyl and chlorine atoms in three possible combinations. Two peaks at 59.1947 and 60.0775 represent two terminal carbons containing a chlorine atom and adjacent to a carbon with either a chlorine atom or hydroxyl group. A terminal carbon atom containing a hydroxyl group is represented by a peak at 66.1882. All these carbons have 2 hydrogen atoms bonded thereto.

The negative peaks are characteristic of a single carbon atom having one hydrogen and a chlorine or hydroxy group. The two peaks at 58.5035 and around 57 represent adjacent carbon atoms with each with a chlorine atom attached. The remaining peak at 67.8781 represents the carbon atom having a hydroxyl group.

A polyfunctional polyaminopolymer of the invention as depicted is treated with base to build viscosity and form a water soluble crosslinked polyaminopolymer. Then the NMR spectrum is again recorded. The carbon 13 NMR of this polymer reveals backbone carbons remaining unchanged and represented by peaks at 27.4190, 37.4474, 37.9599, and 49.1527. However, all peaks which represent carbon atoms bonded to chloride have disappeared. (Under the reaction conditions, these would be expected to react to form crosslinks and/or epoxides or to be hydrolyzed into hydroxyl groups.) The peaks at 59.2191 and 59.0101 represent carbon atoms attached to a nitrogen atom in the crosslink. New peaks at approximately 67.5 and 68.6333 are believed to represent hydrolyzed carbon atoms formerly having chlorine substituents now having hydroxyl groups or epoxides, and thus, shifted downfield.

A carbon 13 spectrum of a commercial water soluble polyaminopolymer (commercially available from Hercules Incorporated under the tradename Kymene™ 557) shows clear structural differences from the polyfunctional polyaminopolymer. The backbone carbons are similar with the peaks at 26.5124, 27.3495, 36.0645, 36.1852, 37.9933, and 48.6721 representating dicarboxylic acid and polyaminopolymer groups in the backbone. Two peaks at 60.6449 and 62.2148 represent carbons (from the epichlorohydrin) involved in crosslinking and, thus, attached to nitrogen atoms.

A very notable difference between the sample of Kymene™ 557 polyaminopolymer and the polyfunctional polyaminopolymer of the invention is that the Kymene™ 557 polyaminopolymer contains azetidinium functional groups as revealed by characteristic peaks at 61.6237 and 75.5836. These peaks correspond to those reported in U.S. patent 4,341,887 which reports peaks at 59.8 and 75.0 (Example 4, page 5, line 45) for the two types of carbons in the azetidinium functional group. Polyaminopolymers of the present invention advantageously do not have this functional group.

Polyaminopolyamides of the invention are preferably crosslinked such that the viscosity increases preferably at least 5 percent as measured with a Brookfield Viscometer, #2 spindle at 60 rpm (revolutions per minute). Crosslinking is controlled such that the gel point is not reached so that the polymer remains water soluble; more preferably the viscosity increases from 5 percent to 300 percent. Crosslinking is suitably accomplished by means within the skill in the art and, preferably, by means outlined herein. Curing accelerators and crosslinking agents are suitably used. When the polyaminopolymer contains dihalo or halohydrin functionality, increasing the pH results in molecular weight increase attributed to crosslinking.

The pH of a polyaminopolymer having a halohydrin or dihalo functionality is preferably raised sufficiently to cause an increase in molecular weight as indicated by viscosity increase. The pH is conveniently raised from 0 to 3 (a pH resulting for example from a hypochlorous acid reaction with for example allyl functionality) to from 5 to 11 for a period of time sufficient to increase the molecular weight of the polymer. Preferably, various functional groups present (for example halohydrins) are also converted to reactive functional groups (believed to be epoxides) before being applied to pulp solutions. The increase in molecular weight associated with the increased pH allows optimum wet strength performance. Either organic or inorganic bases can be used to raise the pH to irom 4 to 10, more preferably to from 5 to 8, most preferably to from 6 to 7. These ranges allow increasingly controlled molecular weight increases while maintaining resin solubility (in water). The polyaminopolymer is preferably water soluble to an extent of at least 1 weight percent resin in the water, more preferably at least 10 weight percent. Bases which are suitably used include alkali metal hydroxides, carbonates and bicarbonates, calcium hydroxide, pyridine, trimethylamine, tetramethylammonium hydroxide, benzyltrimethylammonium hydroxide, triethanol amine and mixtures thereof.

During a pH increase to build molecular weight, the halohydrin and/or dihalo functionalities are believed to react via several mechanisms. One example involves the reaction of secondary or tertiary amino groups with the halohydrin or dihalo functional groups to form amino crosslinking. Another example would include conversion of the halohydrin functionality to epoxide functionality using, for example a base such as sodium hydroxide, and, optionally, further reaction of epoxides with available amino hydrogens to build molecular weight as well as provide further sites for reaction with pulp/paper during drying procedures. In the presence of tertiary nitrogens, epoxide functionalities are believed to react among themselves to form ethers, a reaction believed to be one of the crosslinking mechanisms when for example bis(2-aminoethyl)allylamine is used in the synthesis of a polyaminopolymer. Tertiary nitrogens may react with the halohydrin and/or the dihalo to form quaternary nitrogens during crosslinking. Yet another alternative reaction is that of dihalo functionalities reacting with available amino groups (primary and secondary and tertiary) in a polymer to build molecular weight.

Once the desired molecular weight is achieved through crosslinking, the resin is preferably stabilized to prevent gelation. To stabilize the polymer, water is added to dilute the resin further and the pH is reduced to from 6, preferably from 5, most preferably from a pH of 5 to a pH of from 2 to 3, preferably from a pH of 4 to a pH of 3. This pH reduction is suitably accomplished by addition of formic sulfuric, nitric, perchloric, or hydrochloric acids, preferably hydrochloric acid.

A curing accelerator or crosslinking agent to assist in molecular weight buildup and subsequent viscosity increase is optionally added to the polyaminopolymer having halohydrin or dihalo groups. Suitable accelerators and agents include polyfunctional compounds capable of reacting with the polyaminopolymer. Curing accelerators advantageously employed in this invention include aliphatic and aromatic polyamines such as ethylenediamine; propylenediamine; butylenediamine; 1,6- hexanediamine; o-, m-, and p-phenylenediamine; 3,3′- biphenyldiamine; 1,2,3-benzenetriamine; tripropylenetetramine; triethylenetetramine; diethylenetriamine; heptaethyleneoctamine; or 2,3-diamino- 2-methylbutane. Alkanolamines are also, suitably used as curing accelerators. Examples of suitable monoalkanolamines include monoethanolamine, monoisopropanolamine, or N, N-diethylethanolamine. Examples of suitable diethanolamines include diethanolamine, diisopropanolamine, N-methyldiethanolamine, or N-phenyldiethanolamine. Other suitable curing accelerators include aminoethylpiperazine, aminoethylethanolamine, hydroxyethylpiperazine, or N,N-diethylethylenediamine. Polymeric curing accelerators include the reaction products of polyfunctional acids of esters having from 2 to 10 carbons, including adipic, and glutaric acids or their esters with polyfunctional amines such as those useful in the practice of this invention.

Alternatively, crosslinking is accomplished before reaction with hypohalous acid or halogen. A polyaminopolymer is prepared from the amine/unsaturated alkylating agent adduct and the polyfunctional compound as previously described and then a crosslinking agent reactive with amine groups is used. Suitable crosslinking agents are any compounds reactive with two positions on the polyaminopolymers, preferably compounds having two reactive groups such as two halogen atoms, more preferably an alkyl compound (preferably of from 2 to 6, more preferably of from 2 to 4 carbon atoms) having at least two, most preferably two, halogen atoms. While bromine is the preferred halogen atom because it reacts at lower temperatures than does a corresponding chlorine atom, chlorine atoms are also useful in the practice of the invention. Exemplary crosslinking agents include 1,2-dichloroethane succinyl chloride, malonyl chloride and corresponding bromine compounds, preferably 1,3-dichloropropane or 1,3-dibromopropane, most preferably 1,3-dibromopropane. The crosslinking agent is suitably used in any amount sufficient to produce crosslinking, preferably sufficient crosslinking to achieve the desired viscosity, but when used as a paper additive preferably insufficient viscosity to form a gel, more preferably sufficient crosslinking agent to produce from 3 to 18 percent crosslinking is used, this corresponds to from 1.5 to 9.0 mole percent crosslinking agent based on secondary amine groups in the polyamino polymer. The crosslinking agent is reacted with the unsaturated polyaminopolymer under conditions within the skill in the art for such reactions, such as temperatures preferably from 20°C to 80°C, more preferably from 20°C to 50°C, at any convenient pressure, advantageously atmospheric pressure. Because the polyaminopolymer is often in water as produced, water is an advantageous solvent for the crosslinking, but is unnecessary; other solvents for the polymer and the reactants are suitable.

Crosslinking before reaction with the halogen, hypohalous acid or precursor thereof is advantageous for product stability. The crosslinks are alkyl linkages rather than a beta hydroxy amine linking structure and are, therefore, more stable at low pH such as a pH below about 3.0. Such polymers are more stable, for instance, when stored, particularly because storage conditions suitable for avoiding additional crosslinking through the chlorohydrin or epoxide functionality, advantageously those of pH below 3.5, are not optimum for stability of polymers containing epoxide functionality (advantageous for retention on paper) for storing polymers having beta hydroxy amine functionality, both of which hydrolyze at the indicated PH.

Use of a crosslinking agent to react with the polyaminopolymer produced from the amine/unsaturated alkylating agent adduct and the polyfunctional compound, also allows control of the amount of crosslinking and, thus, control of the molecular weight. Thus, high molecular weight resins such as those having molecular weights equal to or greater than 100,000 are suitably prepared by the process of the invention. Alternatively, or additionally, preselected amounts of unsaturation are left remaining in the polymers so that the polymers are suitable in applications requiring unsaturation such as curing by UV (ultraviolet) or electron beam radiation.

Such a crosslinked polyaminopolymer is suitably further functionalized to form the halohydrin or any other desired functionality, such as by reactions previously discussed to quaternize the polymer and/or to form halohydrin or dihalo functionality. A particularly stable polymer having dihalo or halohydrin functionality is formed by reacting the crosslinked polyaminopolymer with halogen, hypohalous acid or precursor thereof as described previously. Such a polymer is advantageously quaternized by either of the discussed methods before reaction with the halogen, hypohalous acid or precursor thereof. Quaternization using an alkylating agent such as dimethyl sulfate is noted to proceed at a pH higher than 5.6, most preferably a pH of 9, for maximum quaternization. The higher pH allows base reaction with hydrohalides (for example, HCl, HBr) formed during crosslinking using a haloalkyl compound. When a polymer is crosslinked and then reacted with halogen, hypohalous acid or a precursor thereof, the step of raising the pH of the polyaminopolymer having halohydrin functionality or vicinal dihalo functionality sufficiently to cause an increase in molecular weight is optional. While the pH increase is optional, it is desirable to raise the pH, preferably to from 5 to 11, more preferably to from 7.5 to 10.5, for a period of from 5 or 10 minutes to several hours) before addition to wood pulp to cause epoxide formation from the halohydrin functionality. Epoxide groups are believed to react with the pulp, and improved wet strength is observed. Because the polymer becomes more active with pulp, the process of raising the pH is referred to as "base activation".

Thermosetting polyaminopolymers produced in the practice of the invention can be used as such or can be further reacted to form useful derivatives such as for antistatic polymers, or crosslinking agents for carboxylated lattices. Suitable reactions are within the skill in the art such as illustrated by U.S. Patent 4,520,159, especially Example 5 thereof.

The polymers can be applied to paper or other cellulosic products by spraying, dipping, tub application, or other application methods; and the cellulosic products can be subsequently dried with or without heat, preferably with heat, to crosslink the polymer until it becomes insoluble in water. Resulting cellulosic products have increased wet and dry strength over products prepared by the same processes from the same fibers but without the polyaminopolymers; therefore, resins prepared by this invention are suitable for use in impregnating paper such as wrapping paper, or bag paper to impart both wet and dry strength. The polyaminotpolymers are preferably present in amounts of from 0.1 to 5 percent by weight based on weight of cellulosic product, preferably paper.

The preferred method of adding polymers prepared by this invention to paper is by internal addition to the pulp solution prior to sheet formation. Diluted or concentrated resin solutions can be added to a pulp stock (pulp concentration will vary, preferably at pulp concentrations above 0.5, more preferably from 1 to 2 percent by weight) at any suitable stage before sheet formation (sheeting). Such stages include in the beater, stock chest, Jordan engine, fan pump, head box, etc. After a resin is added, a pulp is formed into sheets and dried according to practices in the art.

Paper formed with the resins prepared by the practice of this invention advantageously have sufficient wet strength to be suitable for most applications as it comes off the paper machine, referred to in the industry as "off-the-machine." As paper continues to cure, wet strength development continues to increase to some maximum, usually after 2 to 4 weeks. Post curing of the paper after the cure at room temperature by heat treating the sheets at temperatures from 50°C to 150°C for from 10 to 120 minutes also increases wet and dry strength properties of the paper because of further crosslinking.

Resins prepared by practice of this invention are suitably added to a pulp stock in conjunction with other additives such as other wet or dry strength agents, starch, or carboxymethylcellulose to further improve wet and dry strength performance of the paper. Other paper additives may also be used in conjunction with resins prepared according to the practice of this invention to further improve other paper properties.

Polyaminopolymers, particularly polyaminopolyamides, produced by the practice of the invention have several advantages over similar polyaminopolymers produced either by reaction of epichlorohydrin with polyaminopolyamides or by reaction and subsequent functionalization of unsaturated alkylating agent with polyamides. Any unreacted unsaturated alkylating agent is easily removed from the amine/alkylating agent reaction mixture, eliminating unreacted low molecular weight alkylating agents (particularly low molecular weight halides such as epichlorohydrin, allyl chloride, 1,3 dichloro-2-propanol) from the final product, thus reducing concern about possible environmental and/or toxicity effects. Preferably, there is no measurable quantity of low molecular weight halide (for example molecular weight less than 200) or epihalohydrin in the product polyaminopolymer.

Polyaminopolymers produced by the practice of the invention advantageously provide better wet and dry strength at polymer loadings of from 0.1 to 5, preferably from 1 to 3 percent by weight based on weight of paper compared to commercially available wet strength resins. At concentrations of from 1 to 5 percent by weight, the wet strength as measured by the procedure of TAPPI Standards T205 and T220 is preferably increased by at least 200 percent as compared to a similar paper prepared by the same process using the same fiber or pulp stock but without polyaminopolymers. By adjusting the amount of unsaturated amine in the polymer backbone as well as controlling temperature and chloride ion concentration, the reaction synthesis can be easily controlled to prevent gelation during the molecular weight buildup (crosslinking) step. By adjusting the pH to 2 before the hypohalous acid reaction, resins having much lower color are produced with excellent wet and dry strength properties.

The method of this invention also has the advantage of allowing regulation of the percentage of unsaturation desired in the polymer by controlling the proportion, if any, of saturated amine used with the amine/unsaturated compound adduct for crosslinking. Also, one can control whether unsaturation is attached to a secondary or tertiary amino group by selecting a particular amine/unsaturated compound adduct. Current commercial methods rely on random reaction of for example epichlorohydrin or unsaturated alkylating agent with the secondary and tertiary amines already in the polymer. Thus, these current methods provide less control of polymer characteristics.

An additional benefit of the present invention is the ability to produce linear polyaminopolymers when bifunctional compounds such as pure bis(2-aminoethyl) allyl amine are reacted with a difunctional acid or other difunctional compound. Bis(2-aminoethyl) allyl amine has only two terminal primary reactive amino groups capable of reacting with the diacid, resulting in a linear polyaminopolyamide. Current practice in the art is to react polyfunctional polyamines, such as diethylenetriamine which has three reactive sites capable of reacting with the diacid, to produced branched polyaminopolyamides when the secondary amino groups react with the diacid functional group. These can result in lower molecular weight products. As an example, the weight average molecular weight for commercially available Kymene™ 557 polyaminopolymer is approximately 6600 as determined by gel permeation chromatography (GPC) using a polypropylene glycol standard. The GPC has a column packed with Spherogel TSK, 2000 P. W. commercially available from Varian Associates, Inc. and employs an eluent of 0.1M ammonium acetate in 1:1 weight ratio of methanol and water at a flow rate of 0.5 ml/min and a temperature of 40°C. The sample resin is injected at a concentration of 1 weight percent in an injection volume of 50 μl (microliters) using a propylene glycol standard and a ultraviolet (UV) detector. A finished wet strength resin prepared according to the practice of this invention from the reaction of 96.8 percent pure bis(2-aminoethyl)alkylamine with adipic acid and further reacted with HOCl produces a product with a weight average molecular weight of 11,900, almost two times greater than the commercially available product.

The following examples are given to illustrate but not limit the invention. All percentages and parts are by weight unless otherwise indicated. Examples (Ex.) of the invention are designated numerically, while comparative samples (C.S.) are designated alphabetically.

Representative Example:

To produce an amine/unsaturated alkylating agent adduct, diethylenetriamine (DETA) is alkylated with allyl chloride using procedures detailed in U.S. Patent 3,565,941 (Dick et al.) which is incorporated herein by reference in its entirety. Into a 5 liter reactor equipped with stirring, reflux condenser, heating lamp, pH probe, and temperature controller, was added 1000 g. (9.7 moles) of DETA and 500 g. of water. Sulfuric acid (approximately 300 g) was added dropwise to the stirred DETA/water mixture until the pH of the solution was approximately 7.0. The temperature controller was set to 40°C, and the reactor contents were allowed to equilibrate to 40°C. Over a period of 48 hours, approximately 1500 g. of allyl chloride was added to the reactor in 250 ml. increments periodically while maintaining the pH between 5 and 8. Sodium hydroxide (NaOH) (50 weight percent in water) was used to raise the pH periodically to keep the reactor contents between a pH of 5-8. The reactor contents were allowed to continue reacting until 50-55 percent by weight of the mixture in the reactor was bis-(2-aminoethyl) allylamine as determined by area counts via capillary gas chromatography on a DB-5 capillary GC. Continued reaction is possible with conversions up to 60 percent by weight, but the time required is exceptionally long. At the end of the digesting phase, the reactor contents were heated to 90°C, and the residual allyl chloride was removed by sparging with nitrogen for 3 hours. After removal of the allyl chloride, the reactor content's pH was increased to 12.5 with 50 percent by weight solution of NaOH. The product was filtered to remove salt (NaCl).

A crude mixture of allyl substituted diethylenetriamine (DETA) was obtained with the following composition: DETA - 17.4 percent, bis(2amino-ethyl)allylamine, - 53.8 percent, 1-allyl DETA - 5.3 percent, 1,2-diallyl DETA - 13.5 percent, and 1,3-diallyl DETA - 2.9 percent. (All percentages are determined by area counts from GC

tracings.) By distillation, the desired bis(2-aminoethyl)allylamine was recovered to a purity level of 97 percent area count. The product also contained 0.7 percent area count DETA and 1.4 percent area count 1-allyl DETA.

Into a reactor, equipped with stirring and heating means, a water trap/condenser and a nitrogen sparge, was introduced an amine/unsaturated alkylating agent adduct, and a dicarboxylic acid and optionally a solvent. The mixture was heated, with stirring, to a temperature within the range of from 165° to 210°C. Nitrogen sparging was begun to remove the water produced by the condensation reaction. The reaction was allowed to proceed until a test of the polymer product produced an acid number in the range of 5-15 as measured by titration with potassium hydroxide to a phenophthalein end point. The product was then cooled to a temperature of 100°C and diluted with water to a solids content of 50 percent by weight as measured by removal of volatiles by heating to at least 100°C until a constant weight was achieved. Viscosity measurements were made using a Brookfield viscometer Type LVT, using a #2 spindle at 60 rpm, commercially available from Brookfield Laboratories, Inc.

Example 1: Preparation and Crosslinking of Polyaminopolyamide

A mixture of 98 grams (g) bis(2-aminoethyl) allyl amine and 19 g diethylenetriamine were placed in a reaction vessel equipped with an air driven stirrer, thermometer, water trap/condenser, and a nitrogen sparge tube. With rapid stirring, 125 g adipic acid was added to the amine mixture. After the adipic acid had dissolved in the amine mixture, the resulting solution was heated to 200°C with continuous sparging for 165 minutes, at which time the hydroxyl number of the polyaminopolyamide was 10. The solution was slowly cooled to 125°C, then 220 g water was added. The solution was stirred for several more hours until a clear homogeneous solution was obtained. There was, thus, provided a polyaminopolyamide solution which contains 47.7 percent solids.

Ninety-nine (99) g of the polyaminopolyamide was mixed with 150 g water and 22 g sodium chloride. The resulting solution was cooled to 3°C using an ice bath. Then concentrated hydrochloric acid was added to the solution until the pH was 1.25. To this was added, over a ten minute period, 155 g of a 5.58 percent by weight hypochlorous acid solution in methyl ethyl ketone. After the addition, the solution was stirred at 5°C for 3 hours, then allowed to warm to 25°C and stirred for an additional 12 hours. An aqueous solution of a halohydrin/dichloro functionalized polyaminopolyamide containing 28.9 percent by weight solids was obtained.

A 5M (molar) sodium hydroxide solution was added slowly with rapid stirring at 25°C to 40 g of the polyaminopolyamide to form a solution having a pH of 4.72. The solution viscosity was measured from an initial value of 31 cP (centipoise) (31 kPa·s) using a Brookfield viscometer type LVT at 60 rpm (revolutions per minute) with spindle #2.

After 3 hours, when the viscosity reached 56 cP (kPa-s), 7 g of the solution were added to 4 g water and concentrated hydrochloric acid (HCl) was added until the pH was 2.3 to stabilize the resin. The resulting solution contained a water soluble crosslinked polyaminopolyamide with a solids content of 18.3 weight percent.

The remainder of the polyaminopolyamide continued to react, crosslinking in the presence of the hydroxide to reach higher viscosities which were monitored. At viscosities of 100, 180 and >1000 cP (kPa·s), additional samples were collected and treated (quenched) with water and HCl as described for the first (56 cP (kPa·s)) sample.

Example 2: Preparation and Crosslinking of Polyaminopolyamide

A polyaminopolyamide was prepared from 110 g bis(2-aminoethyl) allyl amine and 110 g adipic acid according to the procedure described in Example 1, except that the polyaminopolyamide solution was heated at 200°C for 4 hours, cooled to 125°C and diluted with 195 g water to give a polyamide solution containing 49.8 percent by weight solids and an acid number of 9.7.

One hundred one (101) g of the solution of polyaminopolyamide was mixed with 150 g water to form a mixture which was stirred until homogeneous, then cooled to 3°C using an ice bath. The pH of the clear solution was then adjusted to 1.25 with concentrated hydrochloric acid. After an initial rise in temperature, the solution was returned to 3°C and maintained at that temperature.

To prepare hypochlorous acid (HOCl), 460 g methyl ethyl ketone and 60 g water were combined to form a solution. The solution was cooled to 0°C using an ice water/sodium chloride bath. Carbon dioxide was sparged into the solution at a rate of 2 SCFH (standard cubic feet per hour at atmospheric pressure and 60°F) (equivalent to $1.57 \times 10^{-5}$ $m^3$ /s at 16°C) throughout each of the following calcium chloride additions (about 1 hour). Then, with rapid stirring, 20 g (by weight) increments of calcium hypochlorite were added every 15 minutes for a total of 80 g. After the last calcium hypochlorite addition, the solution was stirred at 0°C for 15 minutes. Then the upper methyl ethyl ketone layer was collected and contains 6.1 percent by weight HOCl.

With rapid stirring and cooling, 127 g of the 6.1 percent hypochlorous (HOCL) solution in methyl ethyl ketone was added to the polyamide solution over 60 minutes, and the solution was maintained at 3-5°C. The solution

was then stirred at 5°C for 150 minutes; then the temperature was allowed to rise to 25°C, after which the solution was stirred for an additional 15 hours while the 25°C was maintained. Residual HOCl concentration in the solution was measured as 0.0 percent by iodometric titration as described in Standard Methods for The Examination of Water and Wastewater, 16th ed., American Public Health Association, Washington, DC. 1985, p. 298. The solution was poured into a separatory funnel, and the lower aqueous layer was collected and purged with nitrogen for 24 hours to remove any unreacted methyl ethyl ketone, leaving an aqueous solution of polyaminopolyamide halohydrin and/or dichloro groups with a solids content of 23.9 percent by weight.

To 70 grams of the 23.9 percent solids solution was added 10 grams of water'to make a solution having 21 percent solids. The solution was stirred at 25°-30°C. Five molar (M) NaOH was added dropwise until the pH of the solution was 5.18. Viscosity increase was monitored. After 96 hours, when a viscosity of 80 cP (kPa·s) was reached, water was added and the pH was adjusted to 2.8 with concentrated HCl to afford a solution of 16.3 weight percent polymer (resin) in water.

Bleached Kraft pulp (50 percent by weight hardwood - 50 percent by weight softwood) was beaten in water with a pH of 6.45 and a conductivity of 2.8 micromhos as measured using a conductivity meter to a Canadian standard freeness of 495 $cm^3$ as measured by the procedures of TAPPI Standard T227. A portion of the resin was diluted to 1 percent by weight solids in water. The resin solution was added in an amount equal to a 1 percent by weight loading level based on weight of solid resin (in the solution) to a stirred stock solution containing 0.125 percent by weight of the paper pulp. The pH of the pulp solution was then adjusted with dilute NaOH to a pH between 7.0 and 7.5. The pulp was then immediately formed into 6 inch (15 cm) diameter handsheets, each weighing 1.25 grams. The handsheets were then cured in an oven at 80°C for 30 minutes prior to testing. The wet tensile strength of the paper was measured according to the procedures of TAPPI Standards T205 and T220, after each handsheet was soaked in distilled water for 30 minutes at 25°C. Both wet and dry strength were measured on a Mullens burst tester according to the procedure of TAPPI Standard T220.

Wet tensile strength was 9.49 psig (pounds per square inch gauge) (65.43 $10^3$ Pa guage). As compared with the wet tensile strength of a paper made from the same pulp using the reference resin of 5.24 psig (36.13 x $10^3$ Pa guage). Concentrations of the resin of the invention and the reference resin in the paper were 1 percent by weight in pulp.

Example 3: Preparation and Crosslinking of a Polyaminopolyamide

A polyaminopolyamide was prepared as in Example 1 but using 119.5 g adipic acid and 114 g of a mixture of 85 percent bis(2-aminoethyl) allyl amine and 15 percent diethylenetriamine. The polyaminopolyamide had an acid number of 14.3. It was diluted with 205 g water to give a solution having 50.93 percent by weight solids.

To 100 g of the polyaminopolyamide solution was added 150 g water. The solution was cooled to 3°C using an ice bath. Hydrochloric acid was added until the pH was 0.8, then 136 g of a 6.6 weight percent HOCl solution in methyl ethyl ketone was added over a period of 20 minutes. The solution was stirred at 3°C for a period of 4 hours then allowed to slowly warm to 20°C over 15 hours. The resulting halohydrin/dichloro functionalized polyaminopolyamide solution was placed in a separatory funnel, where it separated into layers. The lower (water) layer was collected and purged with nitrogen for 24 hours to produce a 22.9 percent by weight solids solution of the polymer.

To 75 g of this functionalized polyaminopolyamide solution was added 10 g water. With rapid stirring and at 25°C, 5M sodium hydroxide (NaOH) was added until the pH was 6.66. The solution then had a viscosity of 33 cP (kPa·s), measured as in Example 1. Several samples were collected as in Example 1 with the time required to reach a given viscosity, the pH of the stabilized sample, and the percent solids of each sample noted in Table 1.

Table 1

| Resin # | Reaction Time (min.) | Solution Viscosity (cP) (kPa•s) | Stabilized pH | Percent Solids |
|---|---|---|---|---|
| 1 | 15 | 33 | 3.0 | 12.2 |
| 2 | 30 | 33 | 2.9 | 12.4 |
| 3 | 45 | 33 | 3.0 | 11.9 |
| 4 | 60 | 40 | 2.8 | 12.1 |
| 5 | 85 | 95 | 3.0 | 12.2 |
| 6 | 90 | )1000 | 2.44 | 15.0 |

The data in Table 1 shows the reaction times at which viscosity increases occurred.

Examples 4-7

The following examples were illustrative of the invention when used as a wet strength additive to paper. Controls were paper which contained no wet strength additive and with a reference wet strength resin which was a commercially available sample of Kymene™ 557 polyaminopolymer (the age of the resin from the manufacture date was noted). All concentrations were at 1 percent by weight loading levels on the paper, based on weight of the paper unless noted otherwise.

Example 4: Use of Crosslinked Polyaminopolyamides in Paper

Samples of the resins from Example 3 were evaluated in paper in comparison with the reference polyaminopolymer (60 days old) at one percent concentration.

The paper making procedure of Example 2 was repeated using a portion of each sample resin from Example 3 diluted to 1 percent by weight solids in water. The resin solution was added in an amount equal to a 1 percent by weight loading level based on weight of solid resin (in the solution) to a stirred stock solution containing 0.125 percent by weight of the paper pulp, and the pH of the pulp solution was then adjusted as in Example 2. The pulp was formed into sheets, cured and tested as in Example 2.

Table 2

| Resin Sample | Wet Burst Strength (psig) | Dry Burst Strength Tensile (psig) | Wet Strength (Kg/m2) | Dry Burst Strength (Kg/m2) |
|---|---|---|---|---|
| CONTROL* A | 2.1 | 39.7 | 1477 | 27913 |
| RESIN 1 | 5.1 | 45.1 | 3586 | 31710 |
| RESIN 2 | 7.25 | 45.4 | 5097 | 31921 |
| RESIN 3 | 10.6 | 48.3 | 7453 | 33960 |
| RESIN 4 | 11.7 | 50.5 | 8226 | 35507 |
| RESIN 5 | 11.4 | 52.1 | 8015 | 36632 |
| RESIN 6 | 8.2 | 46.9 | 5765 | 32975 |
| Reference* B | 5.9 | 44.4 | 4148 | 31218 |

*Comparative Sample
Not an example of the invention.

The data in Table 2 shows improved wet strength and dry strength of the resins of this invention compared to commercial resins and Control A with no resin. The resins of this invention at a viscosity of between 45 and 90 cP (kPa·s) provided almost 2 times the wet strength of Reference B. Also important was that the wet strength was obtained with no apparent viscosity increase (Resins 1, 2 and 3) of the resins of this invention.

Example 5: Use of Crosslinked Polyaminopolyamides in Paper

A sample of the resin prepared in Example 1 with a viscosity of 180 cP (kpa·s) was tested as a wet strength additive on paper as compared with a reference sample using Kymene™ 557 polyaminopolymer which was less than 60 days old at the concentrations indicated in Table 3 as References C, D and E. Both the resin from Example 1 and the reference sample were diluted with water to 1 percent by weight solids. These resins were added to pulp slurries containing 1.25 percent by weight pulp prepared from 50 percent by weight Federated hardwood and 50 percent by weight Epanol sofwood in water of Canadian freeness 495 $cm^3$ (measured as in Example 4), a pH of 6.7 and a hardness of 75 ppm as measured by the Hach titration method for total hardness as described in Standard Methods for The Examination of Water and Wastewater, p. 209, and expressed as calcium carbonate. The resins were added at different concentrations. Each pulp slurry was stirred for five minutes after the resins were added and before dilution to 0.125 percent by weight pulp in water. The pH of each resulting pulp slurry was adjusted with dilute NaOH to between 7.0 and 7.5. Handsheets were then prepared as in Example 4. Wet and dry strength results were measured as in Example 4 and were shown in Table 3.

TABLE 3

| Resin Sample | Resin Concentration in Pulp (%) | Wet Burst Strength (psig) | Dry Burst Strength (psig) | Wet Burst Strength ($Kg/m^2$) | Dry Burst Strength ($Kg/m^2$) |
|---|---|---|---|---|---|
| Resin 7: Example 1 (180 cPs) | 0.25 | 3.1 | 35.7 | 2180 | 25101 |
| Resin 8: Example 1 (180 cPs) | 1.0 | 7.0 | 39.4 | 4922 | 27702 |
| Resin 9: Example 1 (180 cPs) | 3.0 | 16.0 | 44.2 | 11250 | 31077 |
| Reference* C | 0.25 | 4.4 | 34.1 | 3094 | 23976 |
| Reference* D | 1.0 | 5.9 | 35.6 | 4148 | 25030 |
| Reference* E | 3.0 | 5.8 | 34.7 | 4078 | 24398 |

*Comparative Sample
Not an example of the invention

The data in Table 3 shows the effect of resin concentration on wet strength as compared with commercially available samples (References C, D, E) in water containing 75 ppm (parts per million) calcium carbonate ($CaCO_3$). Higher resin concentrations gave higher wet strengths. The increase in wet strength with concentration did not level off or drop for the polyaminopolymer of the invention as it did for the reference polymer.

Example 6: Use of Polyaminopolyamides in Paper

The resin sample from Example 1 taken at a viscosity of 180 cP (kPa·s) was tested as a wet strength additive using the procedure of Example 5 except for the following differences 1) Canadian freeness of pulp was 500 $cm^3$; (2) the water used did not contain measurable hardness; (3) resin concentrations in pulp were 0.25 and 0.5 percent by weight as indicated in Table 4. Results were shown in Table 4.

Table 4

| Resin Sample | Resin Concentration in pulp (%) | Wet Burst Strength (psig) | Dry Burst Strength (psig) | Wet Burst Strength ($Kg/m^2$) | Dry Burst Strength ($Kg/m^2$) |
|---|---|---|---|---|---|
| Resin 10 | 0.25 | 4.3 | 40.0 | 3023 | 28124 |
| Resin 11 | 0.50 | 7.0 | 37.9 | 4922 | 26648 |
| Reference* F | 0.25 | 6.3 | 46.5 | 4430 | 32694 |
| Reference* G | 0.50 | 6.3 | 44.4 | 4430 | 31218 |

*Comparative Sample; not an example of the invention.

The data in Table 4 shows wet strength of a resin of this invention as compared with a commercially available product at 2 concentration levels. Again, the data shows the wet strength resin of this invention continued to increase with concentration rather than plateauing between 0.25 and 0.5 percent by weight in the paper.

Example 7: Use of a Crosslinked Polyaminopolyamide in Paper

A crosslinked polyaminopolyamide prepared from 88 percent bis(2-aminoethyl) allyl amine and 12 percent diethylenetriamine reacted with adipic acid having an acid number of 6.9 was prepared according to the procedure of Example 1. A sample of this resin with a viscosity of 50 cP (kPa· s) was used as a wet strength additive according to the procedure in Example 4, except that the paper was cured at 25°C for 4 weeks instead of at 80°C for 30 minutes. Paper prepared using a reference sample of Kymene™ 557 polyaminopolymer that was less than 3 months old was also cured at 25°C for 4 weeks. Resin concentration in the pulp was at 1 percent by weight loading levels. Results were shown in Table 5.

Table 5

| Resin | Wet Burst Strength (psig) | Dry Burst Strength (psig) | Wet Burst Strength (Kg/m2) | Dry Burst Strength (Kg/m2) |
|---|---|---|---|---|
| Example 7 | 6.4 | 45.4 | 4500 | 36921 |
| Reference* H | 4.2 | 41.9 | 2953 | 39460 |

*Comparative sample, not an example of the invention.

The data in Table 5 shows that the resins of this invention were equally capable to or better able to increase the wet and dry strength of paper naturally aged/cured (at room temperature).

Example 8: Preparation of a Polyaminopolyamide Having Quaternary Amine Functional Groups

A polyaminopolyamide was prepared as in Example 1 using adipic acid and a polyamine (85 percent 2-allyl diethylenetetraamine/15 percent diethylenetetraamine) with a final acid number of 13.8 and a solids content of 50.1 weight percent. Into a 500 ml flask equipped with an air stirrer, thermometer and addition funnel, was placed 50.1 g of the polyaminopolyamide solution and 78 g of water. The resulting solution was chilled to 2°C using an ice bath. With rapid stirring, 1.95 ml of dimethyl sulfate was added to the solution over a period of approximately 10 minutes. The solution was then stirred at 2-4°C for 4 hours. During this time, 50 percent NaOH was added at intervals of 30 minutes to maintain a pH of 9. After 4 hours, the solution was heated to 65°C for 1 hour and then cooled to obtain 128 grams of a quaternized polyaminopolyamide containing unsaturated functionality. The polyaminopolyamide had increased solubility in water at elevated temperature and elevated pH levels, both as compared with a corresponding unquaternized polyaminopolyamide.

To 100.8 g of this quaternized polyaminopolyamide, at 2°C and with stirring, was added concentrated HCl until the pH was 1.5. Then, at 2-5°C over a period of 10 minutes, 70 g of a 5.37 percent by weight HOCl solution in methyl ethyl ketone prepared as described in Example 2 was added. After addition of the HOCl, the solution was stirred for 15 hours as the temperature was allowed to slowly warm to 25°C. The solution was then placed in a separatory funnel, and the lower aqueous layer collected and purged for 12 hours with nitrogen to remove any unreacted methyl ethyl ketone. A chlorohydrin functionalized polyaminopolyamide with a solids content in water of 26.9 percent by weight was obtained.

To 30 g of the polyaminopolyamide, was added 10 g by weight water. The pH was adjusted with 5M NaOH to 6.1, and the viscosity monitored using a Brookfield viscometer using #2 spindle at 60 rpm. At 48 cP (kPa·s), 20 g of the polymer solution was added to 12 g water, and the pH was adjusted to 3 using a 1:2 solution of sulfuric acid to water. The solids content was 12.67 percent by weight as measured by weighing the polymer after solvent removal by heating in an oven at 120°C for an hour.

The sample remaining after the 30 g used previously were removed continued to react in the presence of the hydroxide until the viscosity reached 110 cP (kPa·s), at which point 12 g of water were added. The pH was adjusted to 3.4 using a solution of 1:2 sulfuric acid and water. A solids level of 14.59 percent by weight was achieved.

These two wet strength resins were compared with a reference sample of Kymene™557 polyaminopolymer in water at the concentrations shown in Table 6. The pulp used in this test was 50 percent by weight Simpson hardwood and 50 percent by weight Simpson softwood which was beat to a freeness of 490 $cm^3$ as measured by TAPPI Standard T-227. The conductivity of the water used was 1600 micromhos as measured using a conductivity meter, and the pH was 6.87.

TABLE 6

| Resin | Concentration in Pulp% | Wet Burst Strength (psig) | Dry Burst Strength (psig) | Wet Burst Strength ($Kg/m^2$) | Dry Burst Strength ($Kg/m^2$) |
|---|---|---|---|---|---|
| Reference* J | 0.25 | 1.67 | 46.38 | 1174 | 32623 |
| Example 8 (@110 cPs) | 0.25 | 1.07 | 48.15 | 752 | 33854 |
| Reference* K | 0.50 | 2.95 | 46.00 | 2074 | 32343 |
| Example 8 (@110 cPs) | 0.50 | 2.57 | 47.10 | 1807 | 33116 |
| Reference* L | 1.00 | 5.40 | 50.24 | 3797 | 35323 |
| Example 8 (@110 cPs) | 1.00 | 5.50 | 50.15 | 3867 | 35260 |
| Reference* M | 3.00 | 15.81 | 55.07 | 11116 | 38720 |
| Example 8 (@48 cPs) | 3.00 | 18.51 | 54.02 | 13014 | 37981 |
| Example 8 (@110 cPs) | 3.00 | 19.87 | 55.37 | 13971 | 38952 |

*Comparative Sample; not an example of the invention.

The data in Table 6 shows the performance of quaternized polymers of this invention compared to the reference resin at various concentrations. At concentrations greater than 1 percent by weight in the paper, the resins of this invention outperformed the commercially available reference resin.

Example 9: Quaternized Polyaminopolyamide

This example illustrates adding a pendant quaternary amine group to the polyamide.

A 30 g sample of the polyaminopolyamide prepared in Example 3, but before reaction with HCl or HOCl, and 45 g of water were placed in a flask and stirred to form a solution. To this stirred solution was added, at 25°C, 1.36 g of glycidyltrimethylammonium chloride. The solution was stirred for 24 hours.

In the procedure of Example 3, for addition of HCl, HCl was added to the solution until the pH was 1.8. Then 74 g of 3.99 weight percent HOCl solution in water were added to the solution over 10 minutes. The resulting product was 31.1 weight percent solids.

In the procedure of Example 3, 15 g of the solution were admixed with 7 g of water. The pH was adjusted to 5.65 with 5M NaOH. At a viscosity of 80 cP (kPa·s), the reaction mixture was added to 13 g water, and the pH was adjusted to 2.96 with concentrated HCl to give a product containing 13.35 weight percent solids.

Example 10

The procedure of Example 9 was repeated except using 28.1 g of the polyaminopolyamide of Example 3 and 42 g of water. To this solution was added, at 25°C, 2.55 g of glycidyltrimethylammonium chloride. The solution was stirred at 25°C for 4 days.

An amount of 15 g of the solution and 7 g water were mixed. The pH was adjusted to 5.76 with 5 M NaOH. At a viscosity of 80 cP, 13 g water were added and were observed to lower the viscosity. The resin was allowed to continue reacting until a viscosity of 75 cP (kPa·s) was reached. Then, the pH was lowered to 2.75 with diluted sulfuric acid (1:2 ratio of acid to water). The final product was a 13.5 weight percent solids solution.

Wet Strength Measurements on resins of Examples 9 and 10

Wet strength measurements were conducted as in Examples 4 and 6 except (1) Canadian freeness of the pulp was 480 $cm^3$ and (2) resin concentration in the pulp was 1 percent by weight. Results of these measurements are shown in Table 7.

Table 7

| Resin | Wet Burst Strength (psig) | Dry Burst Strength (psig) | Wet Burst Strength ($Kg/m^2$) | Dry Burst Strength ($Kg/m^2$) |
|---|---|---|---|---|
| Example 8 | 4.02 | 51.3 | 2826 | 36069 |
| Example 9 | 5.02 | 52.2 | 3530 | 36702 |
| Reference* N | 5.47 | 48.0 | 3846 | 33749 |
| C.S.* Q | 1.19 | 44.5 | 837 | 31288 |

*Not an example of the invention.

The data in Table 7 show that papers made using polyaminopolyamides of the invention have good wet and dry burst strengths.

EXAMPLE 11: Preparation of Polyaminopolyamide, Wet Strength Resin and Paper Therefrom

This example illustrates the use of esters in the preparation of wet strength resins.

Into a 500 ml flask equipped with air stirrer, nitrogen bubbler tube, and Dean Stark trap was placed 76.9 grams of 99.1 percent of bis (2-aminoethyl)allyl amine (allyl DETA) and 9.68 g. diethylenetriamine (DETA) to make an 85 percent 2-allyl DETA/15 percent DETA mixture. To this stirred solution was added 100 g of the following ester mixture:

| | |
|---|---|
| Dimethyl Glutarate | 66 percent |
| Dimethyl Adipate | 16.5 percent |
| Dimethyl Succinate | 16.5 percent |

The reaction mixture was heated at 120°C for 5 hours; then the temperature was raised to 135°C and maintained for 1.5 hours, then raised to and maintained at 150°C for 30 minutes during which time methanol was collected in the trap. The solution was cooled to 100°C, and 150 g water was added to the solution. The resulting unsaturated polyamide was 50.36 percent solids and had a viscosity of 87 cP (KPa·s).

Preparation of Wet Strength Resin:

Into a 500 ml flask was placed 31.4 g of the above polyamide and 50 g water. The solution was cooled to 3-5°C in an ice bath and 76 g of a 4.33 percent HOCl solution in Methyl Ethyl Ketone (MEK) was added over 5 minutes after which the solution was stirred overnight as the ice was allowed to melt. The next morning no residual HOCl was present according to the procedure used in Example 2. The solution was placed in a separatory funnel, the lower aqueous layer collected and purged overnight with nitrogen to remove MEK. Then the resin solution was stored at 25°C.

Two days later 60 g of the resin solution was diluted with 65 g water, and 5M NaOH was added to raise pH to 10.33. This indicates that by using an ester mixture, one can use a pH much higher than used for resins prepared using adipic acid without causing precipitation of the resin. To use this pH with adipic acid resins, the resin must be quaternized.

Resin pH was maintained between 10 and 10.5 with 5M NaOH and viscosity was monitored. After about 3 hours, viscosity was 76 cP (kPa·s). At that point, concentrated HCl was added to lower the pH to 3.1 and 30 g of resin solution was removed and diluted with 15 g water to provide Resin A. Into a 25 ml volumetric flask was placed 2.28 g of Resin A, and the flask was filled to the 25 ml mark to give a 1 percent solids solution in water.

Paper (Ex. 11) was prepared from Resin A as in Example 2 and wet strength was compared to a commercial wet strength resin, indicated as Reference R.

Table 8

| Resin | Concentration in pulp (percent) | Wet Burst Strength (psig) | Dry Burst Strength (psig) | Wet Burst Strength (Kg/m2) | Dry Burst Strength (Kg/m2) |
|---|---|---|---|---|---|
| Ex. 11 | 1 | 10.45 | 53 | 7347 | 37264 |
| Reference* R | 1 | 14.3 | 54 | 10054 | 37967 |
| Control* (no additives) | 1 | 2.08 | 50 | 1462 | 35153 |

* Not an example of the invention.

The data in Table 8 show that practice of the invention using ester starting materials produces resins which impart good strength to paper.

Example 12: Preparation of Polyaminopolyamide, Wet Strength Resin and Paper Therefrom Using Bromine

The following example illustrates the use of a halogen, bromine ($Br_2$), instead of HOCl.

A polyaminopolyamide was prepared as in Example 1 except that the acid number was 9.8 and the solids level in the resulting solution was 51.44 percent.

To 25.8 g of polyaminopolyamide solution was added 40 g water. The resulting solution was cooled to 3-5°C in an ice bath, and 2.5 ml dimethyl sulfate was added. After 2.5 hours of stirring at 3-5°C, the solution was warmed to 25°C and stirred overnight. The next morning, 2.37 ml of bromine at 25°C was added over 5 hours. The resulting solution was stirred overnight to give a bromohydrin functionalized polyaminopolyamide. Nuclear magnetic resonance spectroscopy (NMR) identified by 13c having peaks 46.35 ppm (carbon having bromine atoms and 61.29 ppm (carbon having hydroxy group of bromohydrin) from tetramethyl silane internal standard.

To 30 g of the above product, was added 11 g water to make a 20 percent solids solution to which was added 5M NaOH sufficient to raise the pH to 6.18. After 2 hours, sufficient 5M NaOH was added to raise the pH first to 6.5 and then, 30 minutes later, to 6.22 from the pH of 5.78 which results from reaction. After another 2 hours, viscosity had increased from 24 cP (kPa·s), to 39 cP (kPa·s); then concentrated HCl was added to lower the pH to 3.46. A sample of 8.9 g water was then added to give Resin B. Final resin solids content was 16.63 percent. A sample of 1.68 ml of Resin B was placed into a volumetric flask which was filled to the 25 ml mark to make a 1 percent solids resin solution in water.

The resin was tested for wet strength by making paper (Ex. 12) according to the procedure of Example 2. Results of the testing of the paper and a comparison with a paper made using a commercial wet strength resin, designated Reference S, are given in Table 9.

The data in Table 9 show that a halogen is suitably used in place of a hypohalous acid in the practice of the invention to make a resin which imparts good strength to paper.

Table 9

| Resin | Concentration in pulp (percent) | Wet Burst Strength (psig) | Dry Burst Strength (psig) | Wet Burst Strength (Kg/m2) | Dry Burst Strength (Kg/m2) |
|---|---|---|---|---|---|
| Ex. 12 | 1 | 11.6 | 58.4 | 8156 | 41060 |
| Reference* S | 1 | 13.48 | 59 | 9478 | 41483 |
| Control* (no additive) | 1 | 1.63 | 54 | 1146 | 37965 |

* Not an example of the invention.

EXAMPLE 13: Preparation and Crosslinking of a Polyaminopolymer and Subsequent Reaction with Hypohalous Acid and Paper Therefrom

A polyaminopolymer was prepared as in Example 1, but using 77.3 g bis(2-aminoethyl) allylamine, 22.7 g DETA, 111.1 g adipic acid and heating at 190°C for 4.5 hours to an acid number of 24, followed by 175 ml of water. The polyaminopolymer was diluted to 54.5 percent solids in water and had an acid number of 24. To 30 g of the clear yellow polymer solution was added 1.5 ml of water and 0.4 ml of 1,3-dibromopropane. The solution was heated using a reflux condenser at 50°C for 5 hours. Viscosity had from 75 cP (KPa·s) to 202 cP (KPa·s) measured (at 25°C by the procedure outlined in Example 1). The solution was cooled to 25°C and stirred overnight at this temperature. Viscosity the next morning was 390 cP (KPa·s). Then 55 g water was added to the resin, followed by sufficient concentrated HCl to lower pH from 8.0 to 5.6. The resulting crosslinked, unsaturated polyamide had a solids level of 16.3 weight percent. (hereinafter Resin C)

Into a flask was placed 64 g of Resin C and 64 g water to make an 8 percent solids resin solution. The solution was cooled to 3-5°C using an ice bath. The pH is raised to 9 using 5M sodium hydroxide. Then 1.56 ml of dimethyl sulfate was added. The solution was stirred for 2.5 hours at this temperature and then warmed to 25°C, and maintained for a period of 30 minutes. This gives quaternized resin D in water.

To all of the quaternized Resin D was added concentrated HCl to lower pH to about 1.75. Then 50 g of a 3.98 weight percent HOCl solution in methyl ethyl ketone was added at 3-5°C. The solution was stirred overnight at this temperature, then warmed to 25°C, after which 5M NaOH was added to raise the pH to 1.6. the solution was then sparged overnight with nitrogen to remove the methyl ethyl ketone (MEK). The resulting chlorohydrin containing product was pale yellow and clear. (hereinafter Resin WSR-D1).

This resin can be added directly to pulp as a wet strength resin. Alternatively, the resin can be treated with a base raise pH for additional crosslinking. As an example of such additional crosslinking, sufficient 15 M aqueous NaOH was added to raise the resin solution pH to 5.44 which was maintained for 1 hour, after which the resin was added to pulp for testing (designated Resin WSR-D2).

Resin C was reacted with HOCl in the same procedure used for Resin D to produce a nonquaternized chlorohydrin resin (WSR-C) which was not base activated (not treated with base).

Papers were prepared by the procedure of Example 5 using the resins indicated in Table 10 and wet strengths were measured as in Example 2.

Table 10

| Resin Tested | Wet Strength (psi) | Wet Strength ($Kg/m^2$) |
|---|---|---|
| Control (no additives)* | 1.17 | 823 |
| Reference T (Commercial)* | 18.04 | 12684 |
| WSR-C | 6.35 | 4465 |
| Control (no additives)* | 1.11 | 780 |
| Reference U (Commercial)* | 18.31 | 12874 |
| WSR-D1 | 10.56 | 7424 |
| WSR-D2 | 16.85 | 11847 |

*Not an example of the invention. The commercial resin was not quaternized. Variation between the two control and commercial references indicate the amount of variation resulting from variations in the paper making process.

The data in Table 10 that the practice of the invention even without optimization can produce a wet strength resin which is 92 percent as effective as a commercial resin but does not use and thereore, cannot be expected

to contain, epichlorohydrin or its hydrolysis products.

The resins in Table 10 were stored at room temperature for 2 weeks and then retested.

An additional sample of Resin WSR-D1 was stored at pH 2.6 for the 2 week period. Then Resin WSR-D3 was prenared from resin WSR-D1 by the reaction with HOCl and subsequent pH lowering by the same procedure used to prepare Resin WSR-B2. Then papers were prepared and measurements of wet strength made as for Table 10. Results are shwon below:

Table 11

| Resin Tested | Wet Strength (psi) | Wet Strength ($Kg/m^2$) |
|---|---|---|
| Control (no additives)* | 1.66 | 1167 |
| Reference V (Commercial) | 12.46 | 8761 |
| WSR-D1 | 8.22 | 5779 |
| WSR-D3 | 11.22 | 7889 |

*Not an example of the invention. Reference V was the same commercial resin used in the same amount as in Reference T and U.

The data in Table 11 show no loss in wet strength as a percentage of the Reference after 2 weeks. Resins prepared in previous examples often exhibit less storage stability than those prepared in Example 13 wherein the resin is crosslinked using a polyfunctional compound reactive with amine groups before reaction with HOCl.

## Claims

1. A process for preparing a polyaminopolymer that contains functionality, comprising:-
   (i) contacting an adduct of a polyfunctional amine and an unsaturated alkylating agent with a polyfunctional compound to form a polyaminopolymer;
   (ii) contacting the polyaminopolymer with a halogen, hypohalous acid or precursor thereof to form a polyaminopolymer having halohydrin or vicinal dihalo functionality; and achieving crosslinking in the final polyaminopolymer by either or both of
   (iii) contacting the polyaminopolymer with a crosslinking agent therefor having at least two functional groups reactive with amine groups to form a crosslinked polyaminopolymer prior to or after step (ii); and
   (iv) raising the pH of the polyaminopolymer having halohydrin or vicinal dihalo functionality to cause an increase in molecular weight.

2. A process of Claim 1, wherein the unsaturated alkylating agent from which the adduct is derived is allyl chloride, allyl bromide, allyl iodide, 1-chloro-3-butene, 2-chloro-3-butene, 1-chloro-4-pentene, 2-chloro-4-pentene, 3-chloro-4-pentene, 1-chloro-2-butene, 1-chloro-2-pentene, 1-chloro-3-pentene, 3,3-dichloropropene, 3,3,3-tri-chloropropene, 1,3-dichloropropene, 1,2,3-trichloropropene or 1,1,3-trichloropropene.

3. A process of Claim 1 or Claim 2, wherein the polyfunctional amine from which the adduct is derived is an alkanolamine, polyethylene polyamine, polypropylene polyamine, polybutylene polyamine, or hexamethylenediamine.

4. A process of any one of the preceding claims, wherein the polyfunctional amine from which the adduct is derived is diethylenetriamine, bis-2-hydroxyethyl ethylenediamine, triethylenetetraamine, tetraethylenepentamine, pentaethylenehexamine, hexaethyleneheptamine, aminoethylpiperazine, hydroxyethylpiperazine, aminoethylethanolamine, bis(3-aminopropyl)ethylenediamine, bis(3-aminoethyl)-1, 3-diaminopropane, N,N-dimethyldiethylenetriamine, tris-(2-aminoethyl)amine, polyethylene-imine, a branched or cyclic isomer or congener, of said amines or an ethyleneamine having an average molecular weight of from 200

to 500.

**5.** A process of Claim 4, wherein the polyfunctional amine is diethylenetriamine and the alkylating agent is allyl chloride.

**6.** A process of any one of the preceding claims, wherein the polyfunctional amine is a polyamine having primary and secondary amine groups and the adduct is formed at pH 4 to 9 whereby the unsaturated alkylating agent reacts selectively with a secondary amine group.

**7.** A process of any one of the preceding claims, wherein the amine/unsaturated alkylating agent adduct has been purified to remove unreacted alkylating agent.

**8.** A process of any one of the preceding claims, wherein step (i) takes place in the presence of a saturated polyamine with a mole ratio of adduct to saturated polyamine from 100:0 to 70:30.

**9.** A process of any one of the preceding claims, wherein the mole ratio of adduct to polyfunctional compound in step (i) is from 0.6 to 1.4

**10.** A process of any one of the preceding claims, wherein the polyfunctional compound has at least 2 reactive groups which are independently selected from urea; carboxylic acid; carboxylic ester; acyl halide; epoxide; aldehyde; chloroformate; ketone; diketone; and $\alpha,\beta$- unsaturated acid, ester or aldehyde.

**11.** A process of any one of the preceding claims, wherein the polyfunctional compound is diglycolic acid, adipic acid, succinic acid, oxalic acid, glutaric acid, pimelic acid, suberic acid, azelaic acid, or sebacic acid.

**12.** A process of any one of the preceding claims, wherein the equivalents of halogen, hypohalous acid or precursor thereof used in step (ii) is from 90 to 110 percent of the equivalents of polyaminopolymer.

**13.** A process of any one of the preceding claims, wherein step (ii) takes place at a pH of less than 3; and in step (iv) the pH is raised to from 5 to 8.

**14.** A process of any one of the preceding claims, wherein step (ii) is conducted using hypochlorous acid.

**15.** A process of any one of the preceding claims, wherein there is an additional step (v) between steps (i) and (ii) of lowering the pH of the polyaminopolymer to a pH of from 2 to 3.

**16.** A process of any one of the preceding claims, having an additional step (vi) after step (i) of reacting the polyaminopolymer with a second alkylating agent such that quaternary amine groups are formed.

**17.** A process of Claim 16, wherein the second alkylating agent is dimethyl sulfate, methyl iodide, dimethyl carbonate, trimethyloxonium tetrafluoroborate, triethyloxonium tetrafluoroborate, methyltosylate, ethyl tosylate, diethyl sulfate, ethyl iodide, methyl bromide, ethyl bromide and mixtures thereof.

**18.** A process of any one of the preceding claims, having an additional step (vii) after step (i) of reacting the polyaminopolymer with a compound having a quaternary amine group and a group reactive with the polyaminopolymer such that quaternary amine groups are introduced onto the polyaminopolymer.

**19.** A process of any one of the preceding claims, wherein the polyaminopolymer is prepared such that the polyaminopolymer having increased molecular weight is soluble in water.

**20.** A water soluble polyaminopolymer obtainable by a process of any one of the preceding claims.

**21.** A process for the production of paper wherein a polyaminopolymer is incorporated in the paper, characterized in that the polyaminopolymer is a product of a process of any one of Claims 1 to 19 or is a polyaminopolymer of Claim 20.

**22.** A paper comprising sheeted cellulosic fibers containing 0.1 to 5 percent by weight (based on the dry weight of the paper) of a polyaminopolymer as claimed in Claim 20 and having a wet strength greater than that

of an otherwise identical paper not containing the polyaminopolymer.

**23.** A paper comprising sheeted cellulosic fibers containing a polyaminopolymer as claimed in Claim 20 obtainable by a process as claimed in any one of Claims 16 to 18 wherein quaternary nitrogens are retained in the paper.

**24.** The use of a polyaminopolymer product of a process of any one of Claims 1 to 19, or a polyaminopolymer of Claim 20 for improving the wet strength of paper.